# EUROPEAN PATENT APPLICATION

(11) **EP 4 769 447 A1**
(43) Date of publication of application: **01.07.2026**
(21) Application number: 25225663.1
(22) Date of filing: 19.12.2025
(51) Int. Cl.: H01B 7/285

(54) **HVDC POWER CABLE WITH WATER BLOCKING COMPOSITION**

(30) Priority: 23.12.2024 NO 20241264
(71) Applicant: Nexans, 92400 Courbevoie (FR)
(72) Inventor: MAURI, Massimiliano, 1739 Borgenhaugen (NO); AKULICHEV, Anton, 1769 HALDEN (NO); DOEDENS, Espen, 1788 Halden (NO)
(74) Representative: Acapo Onsagers AS

(57) **Abstract**

A high voltage direct current (HVDC) power cable comprising a non-solid conductor (20), an inner semiconducting layer (19) surrounding the non-solid conductor (20), an insulating layer (15) surrounding the inner semiconducting layer (19) and an outer semiconducting layer (16) surrounding the insulation layer, wherein a water blocking composition is included in interstices of the non-solid conductor (20) wherein the water blocking composition comprises 20-95 wt-% polymer base comprising a polymer selected from polyisoprene, butyl rubber, neoprene, ethylene propylene rubber, ethylene propylene diene monomer rubber, ethylene-octene, styrene ethylene butadiene styrene, polyurethanes and silicone rubber; and 5-50 wt-% conductive filler.

## Description

The present invention relates to a HVDC power cable with a water blocking compound. A non-solid conductor for a power cable comprising the water blocking compound.

### Background

Power cables, especially for high voltage power transfer, require a significant conductor cross section to transfer electrical power. This is commonly achieved by combining a number of metal strands/elements to form the conductor. The number, size and cross section of the strands and the conductor may vary however this is generally referred to as a non-solid conductor or multi strand conductor.

Even when the conductor strands are closely packed there will initially be interstices in between the strands of the non-solid conductor. Non-solid conductors in submarine or subsea power cables need to be longitudinally watertight in order to prevent flooding of the entire conductor in case of damage. There is a danger that water may enter the cable core over time for instance a local damage of the power cable may cause water to enter. After having entered, the water can move in longitudinal direction of the cable core in the voids between the conductor elements of the bundle of conductor elements of the non-solid conductor.

### Prior art

US4095039 discloses a filler compound for high voltage power transmission cables. The compound is low molecular weight isobutylene rubber compounded with more than 29 wt-% electrically conductive carbon.

EP3973556B1 conductors are made watertight by including a polymer-based filling compound in the interstices of the cable strands. The disclosed filling compound comprises polybutadiene, graphite and an antioxidant.

WO2016/206715A1describes incorporating yarns between the conductor strands in a HVDC cable.

### Objectives of the invention

However, in HVDC (high voltage direct current) applications with a cross-linked polyethylene (XLPE) insulation the compatibility between low molecular weight fraction components of the filling compound and the XLPE insulation is of importance in order to obtain the correct electrical properties, especially to achieve the highest voltages and operating temperature (525 kV and 80 or 90°C and above). If low-molecular-weight (LMW) components in the filler migrate into the insulation elements the insulation becomes contaminated. The electric field across the insulation is at these high voltages so high that the contaminated XLPE insulation may become conductive enough to increase the temperature of the insulation and cause degradation or breakdowns. Moreover, as conductor size grows, the amount of filling compound that needs to be incorporated in the conductor also grows, and the correct rheological properties are critical to optimize line speed during production without jeopardizing quality of the cable. Incorrect rheological properties at high speed could result in the formation of protrusions and defects that could cause an electrical breakdown in the power cable.

There is accordingly a need for a HVDC power cable for subsea use with a non-solid conductor with a water blocking composition with improved properties included in the voids of the non-solid conductor.

The invention's underlying problems are solved by the subject matter of claim 1. In a first aspect there is provided a high voltage direct current (HVDC) power cable comprising a non-solid conductor, an inner semiconducting layer surrounding the non-solid conductor, an insulating layer surrounding the inner semiconducting layer and an outer semiconducting layer surrounding the insulation layer, wherein a water blocking composition is included in interstices of the non-solid conductor, wherein the water blocking composition comprises
- 20-95 wt-% polymer base comprising a polymer selected from polyisoprene, butyl rubber, neoprene, ethylene propylene rubber, ethylene propylene diene monomer rubber, ethylene-octene, styrene ethylene butadiene styrene, polyurethanes and silicone rubber;
- optional 0-40 wt-% inert component;
- 5-50 wt-% conductive filler.

The present invention provides a specifically manufactured polymer based water blocking composition with special rheological properties and chemical composition. The water blocking composition may contain inert components to increase the viscosity of the filling compound at temperatures relevant for manufacturing process (i.e. vulcanization at a temperature of 150°C).

The term "inert component" as used herein refers to a compound not providing conductivity and where the core of the inert component does not undergo a chemical reaction with the other elements of the conductor filling compound or the conductor strands.

The inert component may be selected from one or more of calcium carbonate, talk, titanium dioxide, silicon dioxide, magnesium dioxide, borosilicate and other types of glass in the form of glass beads or fibers, including hollow glass beads. It will also be possible to include a combination of two or mor of these compounds in the water blocking composition.

In one aspect of the HVDC power cable the complex viscosity of the water blocking composition at 150 °C is between 10 and 300 kPa·s.

"Complex viscosity" as used herein refers to viscosity measured by an oscillating rheometer operating with a parallel plate probe at 1 Hz frequency and 0.1 % strain amplitude.

In a further aspect of the HVDC power cable the conductive filler is selected from one or more of the following: carbon black, graphite, carbon fibers, potassium titanate fibers, carbon nano-tubes, graphene or metallic powder like aluminum, copper or silver. It will also be possible to include a combination of two or mor of these compounds in the water blocking composition.

In another aspect of the HVDC power cable, the conductive filler has a particle size distribution of: 1 nm to 100 µm. A person skilled in the art will appreciated that this is to be understood that at least 95 wt-% of the particles have an average size within the defined range, preferably 98 wt-%. Alternatives include particle size distribution of: 5 nm to 100 µm for at least 95 wt-% of the particles.

In yet another aspect of the HVDC power cable the polymer base comprises one or more additional polymers selected from polyisoprene, polybutadiene, butyl rubber, polyisobutylene, neoprene, polyurethanes, ethylene propylene rubber, ethylene propylene diene monomer rubber, ethylene-octene, styrene ethylene butadiene styrene and silicone rubber. In this aspect the water blocking composition will comprise a total amount of 20-95 wt-% polymer base, which is a mixture of the selected polymers.

In one aspect of the HVDC power cable the content of volatile chemicals in the water blocking composition is < 1.5 wt-%, when measured via TGA. When the TGA is performed with isothermal step at 200 °C for 1 hr, sample mass is 60 ± 10 mg.

In a further aspect of the HVDC power cable the volume expansion of the water blocking composition is less than 10%, preferably less than 5 %, more preferably less than 4%, when measured at 150 °C compared to room temperature at atmospheric pressure.

In yet another aspect of the HVDC power cable the water blocking composition further comprises a contracting filler, wherein the contracting filler contracts upon heating. In embodiments of this aspect the contracting filler is can be any suitable material having a negative thermal expansion coefficient (CTE) of -1×10⁻⁶ °C⁻¹ and lower. Examples of such materials are metal tungstates, metal phosphates, metal molybdates, metal vanadates, metal arsenates, metal oxides (glass ceramics), and metal nitrides, as disclosed in U.S. Pat. Nos. 5,322,559, 5,433,720, 5,514,360, 5,919,720, 6,521,556, and 7,632,480. A similar effect can also be achieved by adding other compounds as well as substances undergoing phase transformations over a certain temperature range of 30-90 °C.

The preferred contracting fillers are bismuth nickelates (general chemical formula Bi₁₋ₓMₓNiO₃, where M represents a metal and x is a numerical value from 0 to 0.2), zirconium tungstate (chemical formula ZrW₂O₈), hafnium tungstate (HfW₂O₈), Zr₂P₂WO₁₂, Hf₂P₂WO₁₂, and magnetic nanocrystalline materials, such as CuO-nanocrystals, conductive nano-fibers such as carbon nano-tubes, metal alloys like Invar Fe₃Pt, or MnCoGe- or MnCoGeN-based alloys.

In one aspect of the HVDC power cable the contracting filler is present at 0.1-30 wt-% in the water blocking composition.

In a further aspect of the HVDC power cable, the cable is designed for voltages of 100 kV or higher, 320 kV or higher, or 525 kV or higher.

In yet another aspect of the HVDC power cable the insulation layer comprises cross-linked polyethylene (XLPE). Alternatively, the insulation layer may be made of other polymer based insulating compositions.

The present invention also provides a non-solid conductor for a high voltage direct current (HVDC) power cable, wherein a water blocking composition is included in interstices of the non-solid conductor, wherein the water blocking composition comprises
- 20-95 wt-% polymer base comprising a polymer selected from polyisoprene, butyl rubber, neoprene, ethylene propylene rubber, ethylene propylene diene monomer rubber, ethylene-octene, styrene ethylene butadiene styrene, polyurethanes and silicone rubber;
- optional 0-40 wt-% inert component;
- 5-50 wt-% conductive filler.

In a further aspect the water blocking composition in the power cable or the conductor could optionally comprise minor amounts of additives such as processing components like curing agents, antioxidants, reaction-retardants, plasticizers, pigments, etc.

The filling water blocking composition may be manufactured by conventional manufacturing processes developed for processing rubber, gum or mastic.

A method of manufacturing a power cable comprising a conductor surrounded by an insulation system, wherein the conductor is a non-solid conductor comprising conductor elements and a water blocking composition, wherein the method comprises the steps of
a) stranding the conductor elements to obtain a stranded bundle of conductor elements;
b) introducing the water blocking composition in the voids left in the stranded bundle of conductor elements;
c) degassing of the water blocking composition;
d) obtaining the conductor; and
e) surrounding the insulation system coaxially around the conductor.

Although listed as steps, the sequence of the steps may be changed. Alternatively, it is also possible to apply the water blocking composition to the conductor elements before stranding the elements. The step c) degassing may be performed before steps a) and b).

A method of manufacturing the electric power cable could comprises:
- providing a plurality of conductor elements,
- stranding the conductor elements to combine the conductor elements into at least one conductor layer to form a conductor,
- applying a water blocking composition to the conductor elements in a stranding region during the stranding, such that interstices between the conductor elements comprise the water blocking composition,
- heating the conductor elements before and/or during entering the stranding region and/or the water blocking composition to a first temperature during the applying, and
- scraping off a part of the water blocking composition to adjust a layer thickness of the water blocking composition on the at least one conductor layer to a predetermined level,
wherein the water-blocking composition is configured to prevent water ingress within the at least one conductor layer.

The method may further comprise winding a tape around the conductor to create at least one tape layer, wherein the at least one tape layer is configured to block water.

In the method the tape may be wound around the conductor under tension and forms a plurality of tape layers, and the tape layers may be configured to prevent an expansion of the water blocking composition beyond the tape.

### Brief description of the drawings

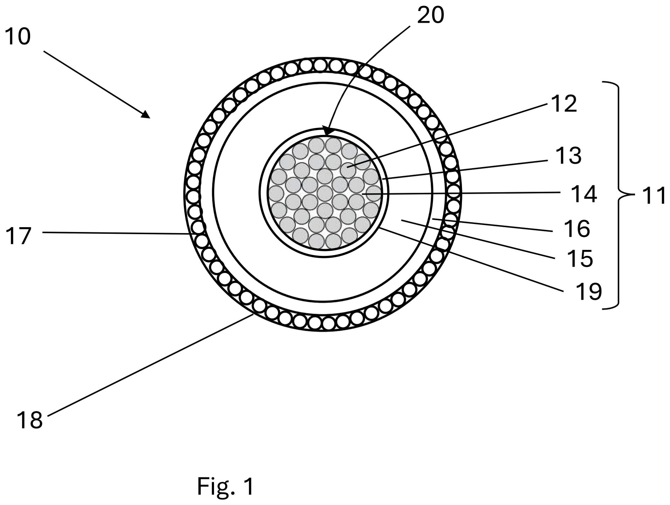

The structure of an illustrative high voltage cable is provided in
Figure 1 showing the cross-sectional design of a power cable.

The skilled person will appreciate the HVDC power cable may be provided with additional outer layer for protection like water barrier, armouring layers further outer sheets.

### Principal description of the invention

Fig. 1 shows an example of a cross section of a power cable. The power cable 10 comprises at least one cable core 11 comprising a non-solid conductor 20 and an insulating system 19, 15, 16 radially surrounding the electrical conductor 20, where the insulating system comprises an inner semiconductive layer 19, electrically insulating layer 15 and outer semiconductive layer 16.

The electrical conductor 20 comprises a plurality of conductor elements 12 which are stranded to combine the conductor elements to form the conductor 20. Figure 1 is one possible design and configuration of the conductor strands. The illustrated cable further comprises a tape layer 13, which may optionally be included between the conductor 20 and the inner semiconducting layer 19. The tape layer 13 when included further restricts the water blocking composition from expending from the voids/interstices 14 and out of the conductor 20. The illustrated cable also comprises an armoring 17 and outer sheath 18.

The water blocking composition may be prepared as discussed above and introduced into the interstices by any applicable method including the methods discussed above. The water blocking composition disclosed herein provides improved viscosity for introducing and maintaining the composition within the interstices during manufacturing and use.

The low amount of volatiles in the water blocking composition has the effect of minimizing the risk of evaporation of volatiles that creates voids within the water blocking composition susceptible to water transport.

The contracting filler can, in a combination with a polymer base that expands during heating provide a water blocking composition without any significant change in volume during heating.

### Reference numbers:

- 10: power cable
- 11: cable core
- 12: conductor element
- 13: tape
- 14: voids
- 15: electrically insulating layer
- 16: outer semiconductive layer
- 17: armoring
- 18: outer sheath
- 19: inner semiconductor layer
- 20: conductor

## Claims

1. A high voltage direct current (HVDC) power cable comprising a non-solid conductor (20), an inner semiconducting layer (19) surrounding the non-solid conductor (20), an insulating layer (15) surrounding the inner semiconducting layer (19) and an outer semiconducting layer (16) surrounding the insulation layer, wherein a water blocking composition is included in interstices of the non-solid conductor (20) **characterized in that** the water blocking composition comprises
- 20-95 wt-% polymer base comprising a polymer selected from polyisoprene, butyl rubber, neoprene, ethylene propylene rubber, ethylene propylene diene monomer rubber, ethylene-octene, styrene ethylene butadiene styrene, polyurethanes and silicone rubber;
- optional 0-40 wt-% inert component;
- 5-50 wt-% conductive filler.

2. The HVDC power cable according to claim 1, wherein the inert component is selected from one or more of calcium carbonate, talk, titanium dioxide, silicon dioxide, magnesium dioxide, borosilicate and other types of glass in the form of glass beads or fibers, including hollow glass beads.

3. The HVDC power cable according to any one of the preceding claims, wherein the complex viscosity of the water blocking composition at 150 °C is between 10 and 300 kPa·s.

4. The HVDC power cable according to any one of the preceding claims, wherein the conductive filler is selected from one or more of the following: carbon black, graphite, carbon fibers, potassium titanate fibers, carbon nano-tubes, graphene or metallic powder like aluminum, copper or silver.

5. The HVDC power cable according to any one of the preceding claims, wherein the conductive filler has a particle size distribution of: 1 nm to 100 µm.

6. The HVDC power cable according to any one of the preceding claims, wherein the polymer base comprises one or more additional polymers selected from polyisoprene, polybutadiene, butyl rubber, polyisobutylene, neoprene, polyurethanes, ethylene propylene rubber, ethylene propylene diene monomer rubber, ethylene-octene, styrene ethylene butadiene styrene and silicone rubber.

7. The HVDC power cable according to any one of the preceding claims, wherein the content of volatile chemicals in the water blocking composition is < 1.5 wt- %, when measured via TGA.

8. The HVDC power cable according to any one of the preceding claims, wherein the volume expansion of the water blocking composition is less than 10%, preferably less than 5 %, more preferably less than 4%, when measured at 150 °C compared to room temperature at atmospheric pressure.

9. The HVDC power cable according to any one of the preceding claims, wherein the water blocking composition further comprises a contracting filler, wherein the contracting filler contracts upon heating.

10. The HVDC power cable according to claim 9, wherein the contracting filler can be any suitable material having a negative thermal expansion coefficient (CTE) of -1×10⁻⁶ °C⁻¹ and lower.

11. The HVDC power cable according to claim 9 or 10, wherein the contracting filler is present at 0.1-30 wt-% in the water blocking composition.

12. The HVDC power cable according to any one of the preceding claims, designed for voltages of 100 kV or higher, 320 kV or higher, or 525 kV or higher.

13. The HVDC power cable according to any one of the preceding claims, wherein the insulation layer comprises cross-linked polyethylene (XLPE).

14. A non-solid conductor for a high voltage direct current (HVDC) power cable, wherein a water blocking composition is included in interstices of the non-solid conductor, **characterized in that** the water blocking composition comprises
- 20-95 wt-% polymer base comprising a polymer selected from polyisoprene, butyl rubber, neoprene, ethylene propylene rubber, ethylene propylene diene monomer rubber, ethylene-octene, styrene ethylene butadiene styrene, polyurethanes and silicone rubber;
- optional 0-40 wt-% inert component;
- 5-50 wt-% conductive filler.
